# EUROPEAN PATENT APPLICATION

(11) **EP 2 679 842 A1**
(43) Date of publication of application: **01.01.2014**
(21) Application number: 13460023.8
(22) Date of filing: 18.04.2013
(51) Int. Cl.: F16C 32/06, F16C 33/10

(54) **Hydrodynamic journal bearing - especially for the use in steam turbine and other rotary equipment**

(30) Priority: 29.06.2012 PL 39908912
(71) Applicant: A&O Expert Olgierd Olszewski, 80-365 Gdansk (PL)
(72) Inventor: Olszewski, Artur, 80-365 Gdansk (PL)

(57) **Abstract**

A hydrodynamic journal bearing, especially suitable for the use in steam turbines and other rotary equipment, contains four pads as in a tilting pad journal bearing. The bearing is comprised of four immovable sliding surfaces (1,2,3,4) of different geometries which ensure creation of four bearing clearances identical, in shape, to those of a corresponding tilting pad bearing under the same operating conditions. The bearing of the present invention offers a significant advantage of having substantially better dynamic properties than lemon bore bearings, sliding bush bearings, multi-lobe bearings etc. which have been used up to now. The bearing of the present invention has identical anti-vibration properties to those of corresponding tilting pad bearings while being free of the faults of large multi-pad bearings such as fretting damage of pad supports, and thermal and elastic pad deformations resulting in the actual bearing characteristics being different from the anticipated ones. Additional advantage is provided by the fact that the bearing is of a compact design and occupies markedly less space than comparable tilting pad bearings. The bearing offers particular advantages for the use in large rotary equipment where journal diameters exceed 150 mm.

## Description

### Area of the Invention

The subject of this invention is a four-pad hydrodynamic journal bearing especially suitable for the use in rotary equipment, such as steam and gas turbines, compressors.

### Background of the Invention

The instability of journal position in the sliding bush of a hydrodynamic bearing operating with high sliding speeds and light loads is a widely recognized phenomenon. Under these conditions, the so-called "oil whirl" effect takes place, which can adversely affects machine's dynamic properties leading, in some cases, to its damage. In order to avoid that and to ensure stable rotor operation (without excessive vibration) multi-lobe anti-vibration bearings are employed.

Initially, the design of bearings was modified in order to increase the critical value of rotating speed at which the oil whirl occurs. One of the commonly known radial anti-vibration bearings is an elliptical bore bearing, also known as a lemon bore bearing. Such bearings are comprised of two horizontally symmetrical half-sleeves each with cylindrical sliding surfaces which centres are located on opposite sides of the plane dividing the bearing. During operation, two lubricating films are formed. They are located opposite each other thus increasing journal stability and preventing excessive vibration. However, such a bearing experiences a significant worsening of its properties when the load direction deviates from being normal to the bush division plane, thus failing to prevent the occurrence of oil whirl under the conditions of maximum sliding speeds or very low loads.

Another way of decreasing the risk of forming the oil whirl is to use a symmetric multi-lobe bearing. In this type of bearings, the centres of radii constituting sliding surfaces are equally distanced from the centre of the bearing housing, and all the sliding surfaces, usually numbering three or four, are placed symmetrically to each other. Taking into account the fact that while under load the journal is displaced and during operation does not occupy symmetrically central position in the bearing, the configuration of the sliding surfaces is always far from being optimal. Therefore, such bearings can offer only a partial solution to the problem of journal instability.

Theoretically, the problem of oil whirl occurrence was solved by the use of tilting pad bearings in which the pads are individually supported allowing for their self-alignment to optimum angles. In this type of bearing, the shapes of the sliding surface of all the pads are identical. Thanks to the supports of tilting pads, each of them, under specific bearing operating conditions, aligns itself to an optimum angle, which, theoretically, eliminates oil whirl in the bearing, with the oil film having appropriate stiffness and the capability to damp the vibrations created in a fluid-flow or a mechanical rotary system.

In case of large rotary equipment, tilting pad bearings have not become popular as their dynamic characteristics (stiffness and damping) were far worse than anticipated due to significant thermal and elastic deformations of their large self-aligning individually supported pads. Low durability of the supports themselves is another problem, with fretting wear of their surfaces caused by unavoidable micro-slips occurring during operation. In addition, bearings of this type occupy considerably more space in the housing comparing to fixed sliding surface bearing types (e.g. lemon bearings).

There is also the solution given in the US 2008095482 (A1) patent specification, which attempted to increase vibration damping capability by supporting bearing pads on a set of disc springs, as the friction occurring between spring surfaces should increase bearing's vibration damping capability. The use of disc spring supports most likely improves bearing's damping characteristics, however after a while the micro-slips occurring between the spring surfaces result in fretting wear which limits their durability. Larger bearings of this type experience pad deformations of relatively unknown character caused by oil pressure and temperature. This leads to a difficult to specify change in the shape of the bearing clearance, which reduces vibration damping capacity.

Another well known solution is the one described in the US 2008013872 (A1) patent specification, where the design of the slide-bed represents an attempt at ensuring axial self-alignment of the bearing. The problem of fretting wear occurring between supports of tilting pads and bearing housing is reduced by the use of hard materials for the retaining platter. However, attempts of employing this solution in large diameter bearings ended in failure due to thermal and elastic deformations of pads' sliding surfaces, which affected bearing's stiffness and damping characteristics.

In addition, there is the sliding bearing design of the US 5795077 (A) patent specification in which the tilting pad is supported by a polymer element designed also with vibration dumping in mind. However, the use of this solution in large sliding bearings is limited by the necessity for precise positioning of the shaft in the housing, as well as the unavoidable aging of the polymer material. This design has not found use as a rotor bearing in large rotary equipment.

Presented in the US 3680932 patent specification is a sliding bearing design aimed at increasing journal's operating stability and load capacity through refining trilobe cylindrical bearings by adding additional oil wedges in the central, inlet part of the sliding surface. While this improves dynamic properties of the bearing, nevertheless, it is much less effective than the results achieved with tilting pad bearings where sliding surfaces are shaped with a radius of uniform value. Carrying out appropriate computer simulations can readily prove this. Relatively small improvement in the dynamic properties of these bearings, as well as significant difficulties associated with their production and control have resulted in their low popularity as rotor bearings in large rotary equipment.

### Summary of the Invention

A hydrodynamic journal bearing of the present invention, especially suitable for the use in steam turbines and other rotary machinery, comprises of four sliding surfaces machined on separate pads, which are fixed to the bearing housing along its entire circumference. Each pad is of different geometrical shape corresponding to a geometry created in a tilting pad bearing for specific operating conditions. The centers of radii creating sliding surfaces of the four pads are displaced by different values of ΔX and ΔY, both in magnitude and direction, in relation to the perpendicular axis X and Y passing through the centre of the bearing mounting.

Fixed position of all four pads is set on the circumference of the bearing housing by means of pins, screws or glue. Two high pressure hydrostatic oil nozzles are located in the lower pads, which are active during machine's run-up and rundown, as well as during shaft line alignment.

One of the significant advantages offered by the bearing of the present invention is that for preset operating conditions it offers dynamic properties, which are identical to those of a comparable tilting pad bearing while eliminating the oil whirl effect. In addition, the bearing of the present invention can be used for the largest journal diameters and highest sliding speeds without any concern for pad deformation and wear of pad-supporting elements since they remain in a fixed position supported along the entire circumference.

Furthermore, the bearing of the present invention allows for a straightforward application of hydrostatic lifting (without use of flexible hoses), while the presence of nozzles in the two lower pads facilitates accurate positioning the shaft during shaft line alignment. None of the presently available types of multi-pad bearings offer such options as the bearing of the present invention. The bearing offers particular advantages for the use in large rotary equipment where journal diameters exceed 150 mm.

### Brief description of the drawings

The subject of the invention is depicted by the following drawings:

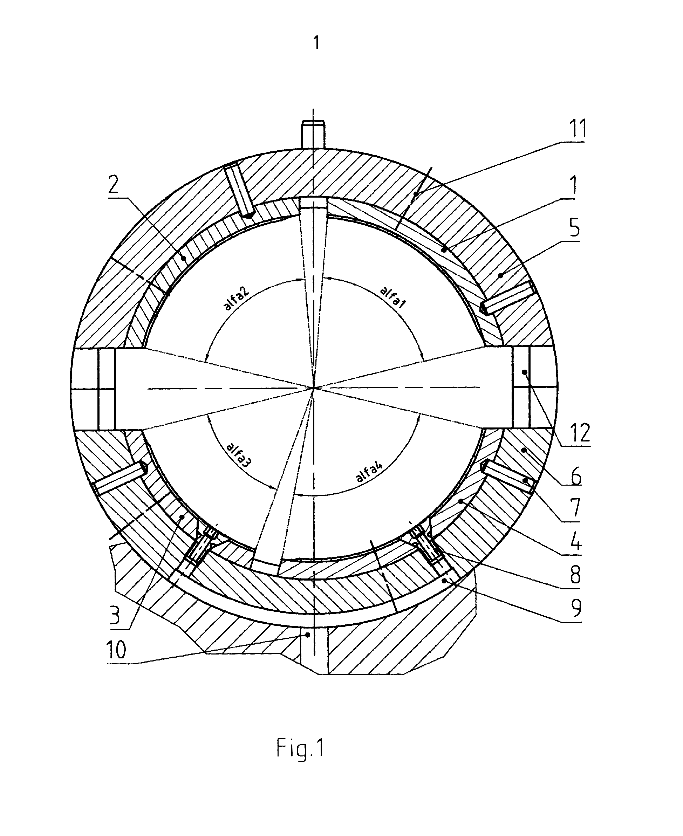

Fig.1 illustrates a cross-section of the bearing along a plane perpendicular to the shaft axis;
Fig. 2 presents turning geometry of the sliding surface of the first pad;
Fig.3, Fig.4 and Fig.5 illustrate the respective geometries of the remaining three bearing pads.

### Preferred embodiment of the invention

The bearing of the present invention is equipped with four immovable sliding surfaces located on four, independent, separate pads, numbered from 1 to 4. The pads have different central angles alpha- for instance, for the fourth pad the alpha ranges from 60° to 170°, and for the first, second and third pads from 40° to 80° respectively.

All of the four pads adhere closely to the bearing housing along its entire inner circumference, which makes tilting of the pad impossible. Furthermore, all the pads are positioned with pins 7) and are fastened to the housing with, e.g. screws 11.

Each of the pads has different sliding surface geometry, selected to precisely reproduce bearing clearances formed under specified operating conditions within a tilting pad bearing with four pads.

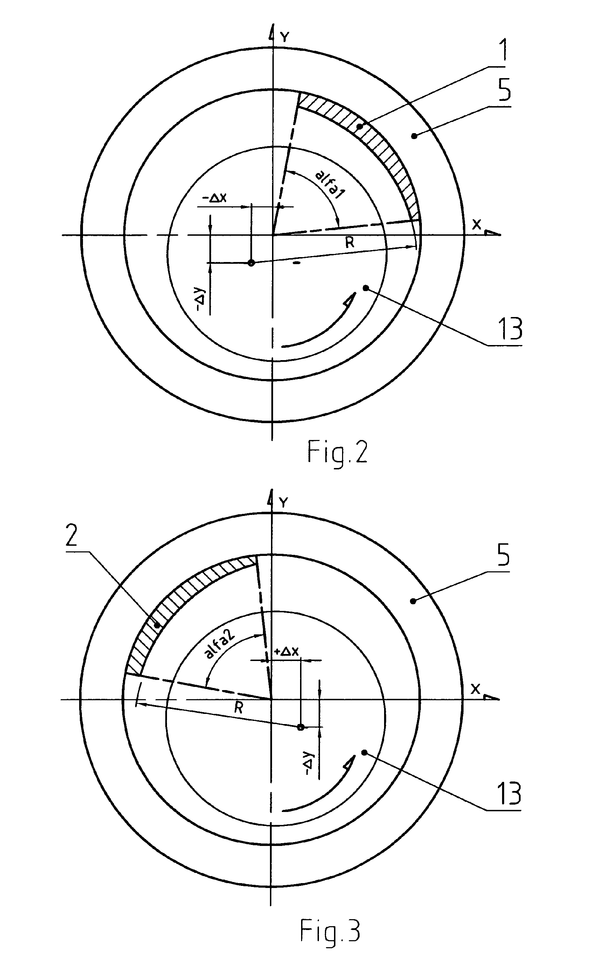

The centre of curvature for each pad is appropriately displaced in both directions (X and Y) relative to the bearing housing centre, as shown in Fig.2 to Fig.5. The radius of curvature is always of a value greater than the sum of journal's radius and radial clearance of the bearing.

By employing modern theories of lubrication and computer based simulations it was proven that anti-vibration properties of bearings are very much dependent on the geometries of sliding surfaces creating the four bearing clearances. In case of tilting pad bearings, proper bearing clearance shape forms by itself due to appropriate tilting of the pad on its support. Under specific operating conditions, in tilting pad bearings each of the pads sets itself at a different angle which means that the starting points of the radii creating the sliding surface are in various ways displaced in relation to the centre of the bearing housing. Only under such conditions, the so called oblique damping and stiffness coefficients are theoretically equal to zero ensuring stable journal operation in the bush.

Using appropriate calculation software for tilting multi-pad bearings under specified operating conditions (specified load and its direction, known journal rotational speed, recommended lubricating oil and heat exchange parameters) one may calculate the exact inclination angle of each pad, as well as pad's location.

By utilizing the calculated geometry of sliding surfaces in tilting pad bearings, and immobilizing the pads as in the bearing of the present invention, i.e. by supporting them along the entire circumference (elimination of tilting) one achieves dynamic properties (stiffness and damping) which are identical to those of tilting pad bearings.

Supporting the pads along their entire length and width in a split housing 5 and 6 eliminated the tilting character of the pads. Pins 7 determine the positions of each pad 1,2,3,4. The pads are mounted to the bearing housing by means of screws 11 or adhesive.

Nozzles 8 located in the lower pads 3 and 4 are fed with oil under high hydrostatic pressure during machine's run-up and rundown. The oil is transported to the nozzles by groove (9), which it reaches through an orifice 10 in the bearing mounting. Located in the cross-sectional plane are grooves 12 feeding lube oil under low pressure.

In turn, Fig. 2 illustrates pad 1 and direction of shaft revolution 13. The sliding surface of the pad, which creates the advantageous bearing clearance shape, is obtained by prescribing it with radius R which value is dependent on the journal radius, preload and the required bearing clearance. Representative location of the radius' centre is defined by the co-ordinates ΔX = -0.7·10⁻³ r and ΔY = -1.9·10⁻³ r, where r is the journal radius.

Fig. 3 shows pad 2 in a way analogous to pad 1. Representative location of the radius' centre is defined by the co-ordinates ΔX = +1.8·10⁻³ r, and ΔY =-1.0·10⁻³ r.

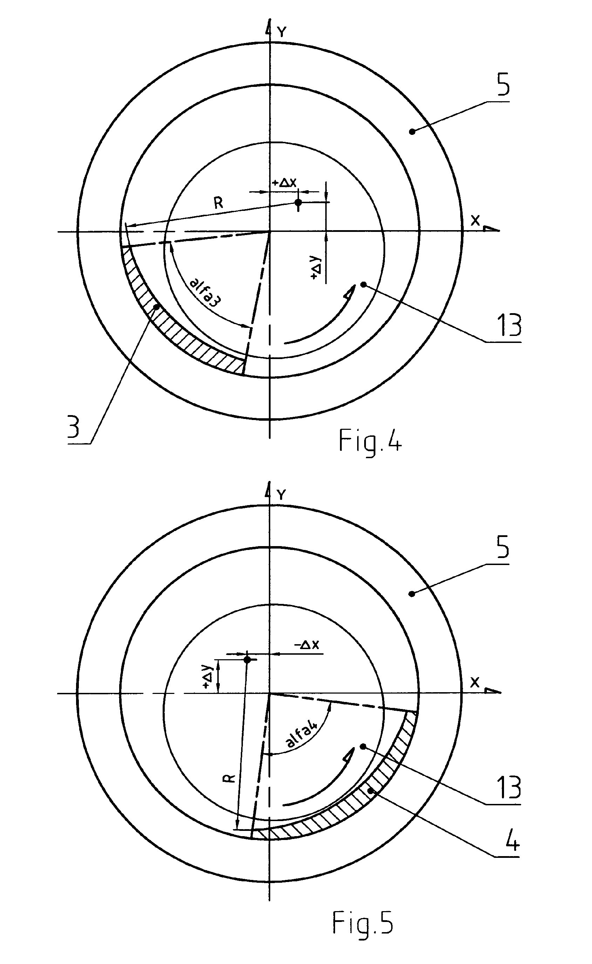

Fig 4 illustrates pad 3 in a way equivalent to pad 1. Representative location of the radius' centre is defined by the co-ordinates ΔX = +1.3·10⁻³ r and ΔY = +1.25·10⁻³ r.

Finally, Fig 5 depicts pad 4 in a way similar to pad 1. Representative location of the radius' centre is defined by the co-ordinates ΔX = -1.35·10⁻³ r and ΔY = +1.3·10⁻³ r.

The values of displacement ΔX and ΔY are different for each of the pads and depend on the journal diameter, required clearance, bearing's load, sliding speed, direction of shaft rotation, oil viscosity, and its inlet temperature. These values are determined by means of special calculation software co-developed by the author of this application. The best dynamic properties of the bearing (stiffness and damping) for specified operating conditions of the bearing are obtained only for a unique combination of correctly selected values of ΔX and ΔY with proper +/- signs, as shown in Fig.2 to Fig.5. In such a case, the so called slant coefficients of stiffness and damping are practically equal to zero, which guarantees elimination of the oil whirl even at the highest sliding speeds and negligible bearing loads.

### Use of the invention

The bearing of the present invention is suitable for industrial applications in steam and gas turbines, rotodynamic compressors, centrifugal pumps, fans and similar machines in which high sliding speeds occur. For specified operating conditions the bearing possesses dynamic properties which are comparable to those of a similar tilting pad bearing while being free of the faults, such as fretting damage on pad supports, as well as thermal and elastic deformations of pads which result in the actual bearing characteristics being different from anticipated ones, present in large, multi-pad bearings. In addition, the bearing can be accommodated in a compact housing and occupies significantly less space than a comparable tilting pad bearing.

## Claims

1. A hydrodynamic journal bearing, especially for the use supporting the shafts of steam turbines and other rotary equipment, containing four pads as in the design of a tilting pad, is **characterized in that** the sliding surfaces machined directly on four separate pads (1,2,3,4) with each of the pads immovably fixed within the bearing housing (5,6) along its entire circumference, and where each of the pads is of a different geometrical shape corresponding to the geometry formed by a comparable tilting pad bearing for specified operating conditions, and where the centres of radii describing the sliding surfaces of the pads (1,2,3,4) are displaced by different, for each pad, ΔX and ΔY, both in the magnitude as well as direction, relative to perpendicular axes of X and Y running through the centre of the bearing mounting.

2. A hydrodynamic journal bearing according to claim 1, **characterized in that** the centre of the radius R of the pad (1) is defined by the displacements of ΔX=(-0.1 to 0.9) ·10⁻³ r and ΔY=(-0.2 do -2.5) ·10⁻³ r, relative to the axes of the bearing mounting.

3. A hydrodynamic journal bearing according to claim 1, **characterized in that** the centre of the radius R of the pad (2) is defined by the displacements of ΔX=(0.2 to +2.5) ·10⁻³·r and ΔY=(-0.5 to -2.3) ·10⁻³·r, relative to the axes of the bearing mounting.

4. A hydrodynamic journal bearing according to claim 1, **characterized in that** the centre of the radius R of the pad (3) is defined by the displacements of ΔX=( 0.2 do 2.2) ·10⁻³·r and ΔY=(0.1 do 2.1) ·10⁻³·r, relative to the axes of the bearing mounting.

5. A hydrodynamic journal bearing according to claim 1, **characterized in that** the centre of the radius R of the pad (4) is defined by the displacements of ΔX=(-0.1 do -2.2) ·10⁻³ and ΔY=(0.2 do 2.3) ·10⁻³·r, relative to the axes of the bearing mounting.

6. A hydrodynamic journal bearing according to claim 1, **characterized in that** the fixed position of all the pads(1,2,3,4) is set on the circumference of the bearing housing by means of pins (7), as well as screws (11) or adhesives.

7. A hydrodynamic journal bearing according to claim 1, **characterized in that** the pads (3) and (4) contain nozzles (8), connected by oil groove (9), for supplying oil under high pressure during machine run-up and rundown, as well as during alignment of shaft lines.

8. A hydrodynamic journal bearing according to claim 1, **characterized in that** the shaping of the sliding surface of each pad with radius R takes place over the entire internal surface of the pad.
